# EUROPEAN PATENT SPECIFICATION

(11) **EP 1 578 576 B1**
(45) Date of publication and mention of the grant of the patent: **18.03.2009**
(21) Application number: 03814272.5
(22) Date of filing: 19.12.2003
(51) Int. Cl.: B29B 11/16, B29C 70/30, B29C 70/46

(54) **NEAR NET SHAPE PREPREG**
ENDFORMNAHES PREPREG
PREIMPREGNE PRESQUE A LA COTE

(30) Priority: 20.12.2002 US 435900 P
(43) Date of publication of application: 28.09.2005
(73) Proprietor: DOW GLOBAL TECHNOLOGIES INC., Midland MI 48674 (US)
(72) Inventor: BARRON, James, H., Brazoria, TX 77422 (US); SHAFI, Muhammad, Asjad, Lake Jackson, TX 77566 (US); BANK, David, H., Midland, MI 48642 (US); OELBERG, James, D., Saginaw, MI 48603 (US); DION, Robert, P., Midland, MI 48640 (US)
(74) Representative: Raynor, John
(86) International application number: PCT/US2003/040824
(87) International publication number: WO 2004/058471

(56) References cited:
- WO-A-98/22644
- US-A- 4 767 643

## Description

The present invention relates to a process for producing near net shape prepregs; and to a process for producing structural composite articles from such near net shape prepregs.

Heretofore, various processes have been used for producing structural composite articles. For example, composites compression molding is a process in which rectangular charges of a heated thermoset or thermoplastic material of resin and glass are forced to flow, using high compression pressures, into complex shapes in a closed mold to form a composite article. High compression pressures (for example 7 MPa to 10 MPa) are necessary to flow the resin and glass laterally in the mold. In such a compression molding process, problems arise when the glass does not flow uniformly with the resin, creating resin rich areas and causing uneven distribution of glass in the final composite article. Also, internal stress can be built into the composite article or part through rapid solidification and shear conditions of compression. Both of these conditions are undesirable during compression molding, because when one or both of these conditions are present, the resulting composite part exhibits non-uniform mechanical performance and warping.

Another known process in accordance with the preamble of claim 1 for preparing composite articles is described in WO-A-9822644.

U.S. Patent No. 6,030,575 describes a process for making fiber preforms, but does not describe preparing a near net shape prepreg. In the process of U.S. Patent No. 6,030,575, a fiber preform is placed into a closed mold and then additional resin is injected into the closed mold, wetting out and encapsulating the reinforcing fibers of the preform. The injection pressure is normally between 1.75 MPa to 3.5 MPa. Such a fiber preform process requires additional resin and injection equipment; and is prone to high scrap rates when the resin does not completely fill the preform resulting in the final composite part made from such a fiber preform containing dry spots of bare fiber.

What is still needed in the composite industry is a process for producing complex shaped composite articles with uniformly distributed fibers in the resin matrix, at rapid rates (for example < 15 minutes), with low molding pressure (for example <1.0 MPa), without the need for resin injection equipment, and with minimal(for example <10 percent) offal scrap.

One aspect of the present invention is directed to a process for preparing a prepreg of a complex configuration, including spraying, for example, chopped reinforcing fibers toward a perforated screen which is in the complex shape of the article to be fabricated. A blower behind the perforated screen pulls air through the screen and holds the fibers in place. Concurrently or subsequently, a matrix resin such as a thermoplastic or a thermoset matrix resin, in the form of, for example, a powder or fiber, is sprayed toward the screen to contact and combine with the reinforcing fibers. The proper fiber/resin ratio used is dictated by part design of matrix resin and reinforcing fiber required for a final composite article. The ratio of fiber/resin can also be varied within the part by design to meet the local stress requirements of the part.

In the process of the present invention, heat is applied to the matrix resin sufficient to melt and bond the resin to the fiber at the surface of the article on the screen. The process of the present invention forms a porous skeletal structure which does not block air flow and combines the fiber and resin uniformly distributed throughout the structure maintaining its shape. This free-standing uniform skeletal structure or article is called a "prepreg" defined herein below.

Accordingly, in the first aspect of the present invention, there is provided a process for making a near net shape prepreg, suitable for use in preparing a composite article, comprising:
(a) depositing reinforcing fibers in an amount of at least 13 volume percent of the prepreg onto one side of a foraminous screen having a vacuum means positioned on the opposite side thereof which maintains the fibers in position on the one side of the screen,
(b) depositing resin matrix material onto the same side of the foraminous screen as the reinforcing fibers above wherein the vacuum means positioned on the opposite side of the foraminous screen maintains the resin matrix material with the fibers in position on the one side of the screen,
(c) heating the resin matrix material sufficiently to bond the resin matrix material to the reinforcing fibers at the surface of the screen to form a resin and fiber structure,
(d) allowing the resin and fiber structure to cool such that a near net prepreg is formed; and
(e) drying the formed prepreg by (i) placing the prepreg in an enclosure having an inlet and an outlet for passing a hot dry gas therethrough, and (ii) passing the hot dry gas through the prepreg in the enclosure.

Preferred embodiments are defined in claims 2 to 13.

The process of the present invention for preparing the composite article advantageously uses a much lower pressure than conventional compression molding processes and produces a better quality composite that is much more uniform due to a minimum of fiber movement in the mold.

"prepreg" herein means an unconsolidated free-standing structure comprising a mixture of reinforcing fiber and matrix resin, with one or more optional components, bound together into a form that can be handled and loaded into a compression mold.

"Near net shape" herein means very nearly, but not exactly, the shape of the final part to be molded, with a small amount (for example less than 10 percent) of perimeter trim.

Generally speaking, the present invention relates to producing a structure of a complex shape or configuration, such as a 2-dimensional or 3-dimensional uniform skeletal structure or article, that is a "prepreg," from which a structural composite part may be produced.

The prepreg of the present invention is prepared from a prepreg composition comprising (a) a reinforcing fibrous material, (b) a matrix resin material, and (c) optionally, various additives or other additional components.

Preparing the prepreg generally involves depositing the prepreg composition onto a perforated or foraminous screen. The screen is in the shape of the article to be fabricated; or alternatively, the screen is in the shape of a flat sheet. Typically, the deposition is carried out by a propelling or spraying means. A blower behind the screen pulls air through the screen and holds the prepreg composition in place. In the process of depositing the prepreg composition of the present invention, heat is applied to the prepreg composition sufficient to melt at least a portion of the matrix resin of the prepreg composition and bind the matrix resin to the reinforcing fiber material of the prepreg composition at the surface of the article on the screen. The process of the present invention forms a porous skeletal structure which does not entirely block air flow and combines the reinforcing fiber material and resin material uniformly distributed throughout the structure maintaining its shape. This free-standing uniform skeletal structure or article is the "repreg" of the present invention.

Depositing the prepreg composition onto the perforated screen may be carried out in various ways. For example, one way to deposit the prepreg composition onto the screen is to deposit all of the components of the prepreg composition concurrently. Another way to deposit the prepreg composition onto the screen is to deposit the components of the prepreg composition separately and sequentially in any order. For example, one way to deposit the prepreg composition onto the screen is to deposit the reinforcing fiber material of the prepreg composition concurrently with the matrix resin of the prepreg composition. Another way to deposit the prepreg composition onto the screen is to first deposit the reinforcing fibers onto the screen followed by depositing the matrix resin onto the perforated screen such that the previously deposited reinforcing fibers are combined with the matrix resin in the proper ratio required for the composite article.

The reinforcing fibers employed in the prepreg composition of the present invention may be, for example, glass, graphite, carbon, aramid, synthetic fibers such as polyester and polyamid fibers, or high flexural modulus organic polymer fibers. The reinforcing fibers used in the present invention should be selected from materials that can withstand temperatures needed to melt the matrix resin and form the prepreg of the present invention. Examples of commercially available reinforcing organic fibers useful in the present invention are KEVLAR^{™} and SPECTRA^{™} fibers commercially available from E.I. duPont and Honeywell respectively.

The size of the reinforcing fibers may vary. The length of the fibers may be from 10 mm to a continuous fiber. Preferably, the length of the fibers are from 15 mm to 75 mm. The diameter of the fibers may be from 1 to 100 microns; preferably from 5 to 50 microns. Thus, the aspect ratio of the fibers may be from 150 to 75,000; preferably from 300 to 15,000.

The amount of reinforcing fibers used in the prepreg composition is at least 13 volume percent and may be from 13 volume percent to 65 volume percent; preferably from 15 volume percent to 60 volume percent.

Generally, the matrix resin employed in the prepreg composition of the present invention may be a thermoplastic or a thermoset matrix resin. The matrix resin may be employed in the form of a powder, fibers or pellets.

Examples of the thermoplastic matrix resin employed in the present invention may be polyolefins such as polypropylene and polyethylene; and polyesters.

Examples of the thermoset matrix resin employed in the present invention may be phenolic resins, vinyl ester resins, polyester resins, or epoxy resins including hardeners for such resins.

In one embodiment of the present invention, the matrix resin employed in the prepreg composition may be a cylic oligomer. Cyclic oligomers have a ring-like structure and degrees of polymerization of between 2 and 10. The cyclic oligomers are a unique type of resin which perform a ring-opening polymerization at temperatures between the melting and decomposition points of the oligomer, and convert from a solid at ambient temperature (25 ºC) to a low viscosity liquid having a viscosity of from 5 centipoise (cps) to 100 cps, and then chain extend into a thermoplastic resin.

Illustrative examples of the cyclic oligomers used in the present invention as the matrix resin may be, for example, polycarbonates, polyesters, nylon, polyamides, poly(1,4-butylene terephthalate) (PBT), poly(1,4-cyclohexylenedimethylene terephthalate) (PCT), poly(ethylene terephthalate) (PET), and poly(1,2-ethylene 2,6-naphthalendicarboxylate) (PEN) oligomers; copolyester oligomers comprising two or more of the above monomer repeat units; and mixtures thereof as well as iso- and ortho-substituted phthallates. Preferably, PBT is used as the matrix resin in the present invention.

The amount of matrix resin alone, or in combination with optional components, used in the prepreg composition may be from 87 percent to 35 percent; preferably 85 percent to 40 percent based on volume.

In addition to the reinforcing fibers and matrix resin, the prepreg composition used to form the prepreg may contain one or more other optional components used for their intended purposes and intended to provide various benefits or improvements to the prepreg or to the final composite part. For example, one or more other optional components that can be added to the prepreg composition of the present invention may include for example toughening agents, coupling agents, scavenging agents, low melting additives, fillers, fire retardants, flow modifiers, pigments, UV stablizers, mold release agents, core shell rubber particles; nano-sized reinforcing particles; mineral particles; diepoxide resins, diisocyanate resins, or mixtures thereof to improve the properties of the resultant prepreg and composite article.

The amount of any of the other optional components used in the prepreg (composition, as part of the matrix resin component, may be from 0 to 50 wt percent; preferably, from 1 wt percent to 40 wt percent.

The other optional component(s) may be added separately, either prior to or subsequent to any of the other components of the prepreg composition; the other optional component(s) may be added concurrently with all of the other components of the prepreg composition; or the optional component(s) may be combined with one or more of the other components of the prepreg composition, for example the optional component(s) may be dispersed in the matrix resin of the prepreg composition before combining the matrix resin with the reinforcing fibers of the prepreg composition. The optional components may be in the form of particles, powder, fibers, pellets or mixtures thereof.

For example, mineral particles are optionally added to the prepreg composition and such prepreg composition is deposited onto the foraminous screen. The mineral particles may be deposited separately with the other components of the prepreg composition either concurrently or subsequently. Preferably, the mineral particles are dispersed into the matrix resin and the dispersion is deposited onto a formaminous screen concurrently with or subsequent to the reinforcing fibers to form the prepreg.

The mineral particles which may be employed in the prepreg composition include for example talc, clay, calcium carbonate, mica, wollastinite or mixtures thereof.

The particle size of the mineral particles may be from 0.1 micron to 500 microns, preferably from 10 microns to 100 microns.

The mineral particles are used as a secondary reinforcement material to improve the stiffness, and dimensional stability of the resulting structural composite parts. Use of mineral particles as an additive may also reduce the cost of preparing the resulting composite part.

The mineral particles may be added to crystalline and semi-crystalline thermoplastic materials to improve the rate of crystal formation during processing. In this case, mineral particle reinforcement is added in combination with reinforcing fibers as a mechanism to provide more isotropic performance while obtaining most of the positive mechanical benefits of long reinforcing fiber reinforcement. For example, a mineral particle such as talc is incorporated into cyclic butylene terephthalate oligomer (CBTO). CBTO both polymerizes and crystallizes in the presence of heat to form a semi-crystalline thermoplastic. The mineral particles improve the crystallization rate of the polymer, reducing the molding cycle time. The dispersion of mineral particles into CBTO is compatible with the operating parameters of the thermal spray prepreg process, and can improve the physical properties and processing conditions of the articles fabricated by this process.

A coupling agent may be optionally added to the prepreg composition. For example, a coupling agent such as a diepoxide resin may be dispersed into the matrix resin and such dispersion may be deposited onto a formaminous screen either concurrently with, prior to, or subsequent to the reinforcing fiber to form the prepreg. The coupling agent employed in the prepreg composition of the present invention may include for example aliphatic diepoxides, aromatic diepoxides, aromatic diisocyanates, aliphatic diisocyanates or mixtures thereof. Preferably, a diepoxide such as for example a diglycidylether of bisphenol A or other polyepoxides may be used in the present invention. For example, a commercially available polyepoxide is DER* 662UH commercially available from The Dow Chemical Company.

During the molding process to form the composite using the prepreg, the diepoxide resin may act as a coupling agent to increase molecular weight of the matrix resin and could produce crosslinking. For example, in a preferred embodiment, the polymerization of CBTO may be improved with the coupling agent. CBTO polymerizes with heat but the final molecular weight of CBTO can be less than desired through interference of several different factors such as moisture or fillers. The presence of diepoxides may improve polymerization of CBTO by increasing its molecular weight. The molecular weight of the matrix resin may be from 40,000 to 200,000. As one illustration, the following presents a schematic of the chemistry involved in the coupling system:

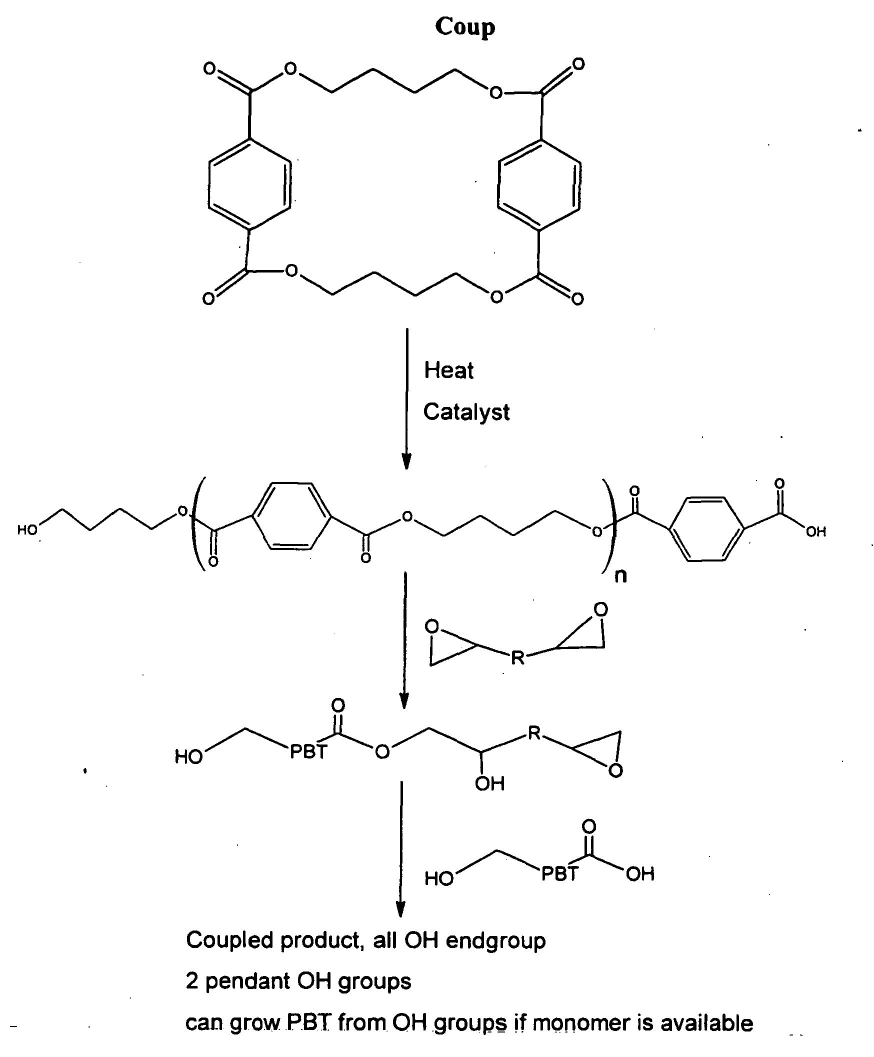

The dispersion of the diepoxide resin into CBTO is compatible with the operating parameters of the thermal spray prepreg process, and may improve the physical properties of the articles fabricated by this process.

In another embodiment, an acid scavenger may be added to the prepreg composition of the present invention. For example, the diepoxide used as a coupling agent as described above may also act as an acid scavenger. Other acid scavengers may include for example aliphatic diepoxides, aromatic diepoxides, aromatic diisocyanates, aliphatic diisocyanates or mixtures thereof.

As one illustration, the following is a schematic of the chemistry illustrating the acid scavenging system:

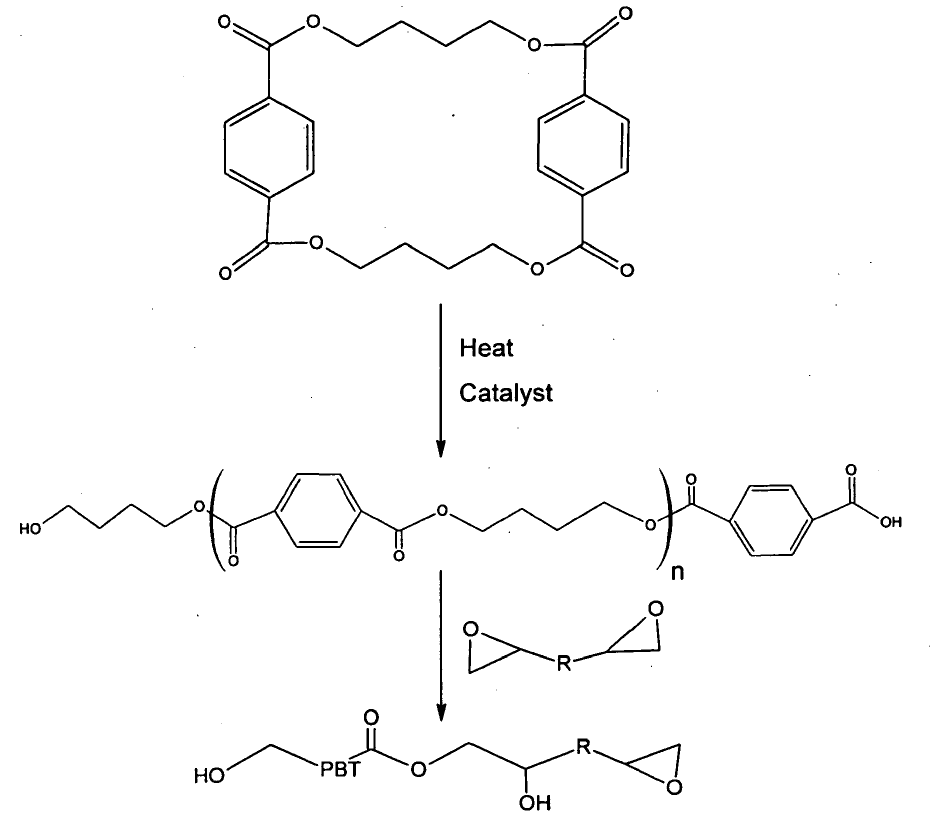

The prepreg composition may include for example a toughening agent such as a core shell impact modifier material such as for example core shell rubber particles. The core shell rubber particles are preferably dispersed into the matrix resin and such dispersion is deposited onto a formaminous screen either concurrently with, prior to, or subsequent to the reinforcing fibers to form the prepreg.

Other toughening agents employed in the prepreg composition of the present invention include for example the introduction of low Tg (<0°C, preferably <-40°C) blocks from hydroxyl terminated polyethers such as polyethylene glycol, polybutylene glycol, polypropylene oxide, or the introduction of a polyolefinic rubber.

Core shell rubber particles are used to improve the toughness of structural composite parts. For example, a preferred embodiment of the present invention is the incorporation of core shell rubber particles into CBTO. The dispersion of core shell particles into CBTO is compatible with the operating parameters of the thermal spray prepreg process, and can improve the physical properties and processing of the articles fabricated by the present invention process.

As one illustration, a schematic of the chemistry of using a core shell material is as follows:

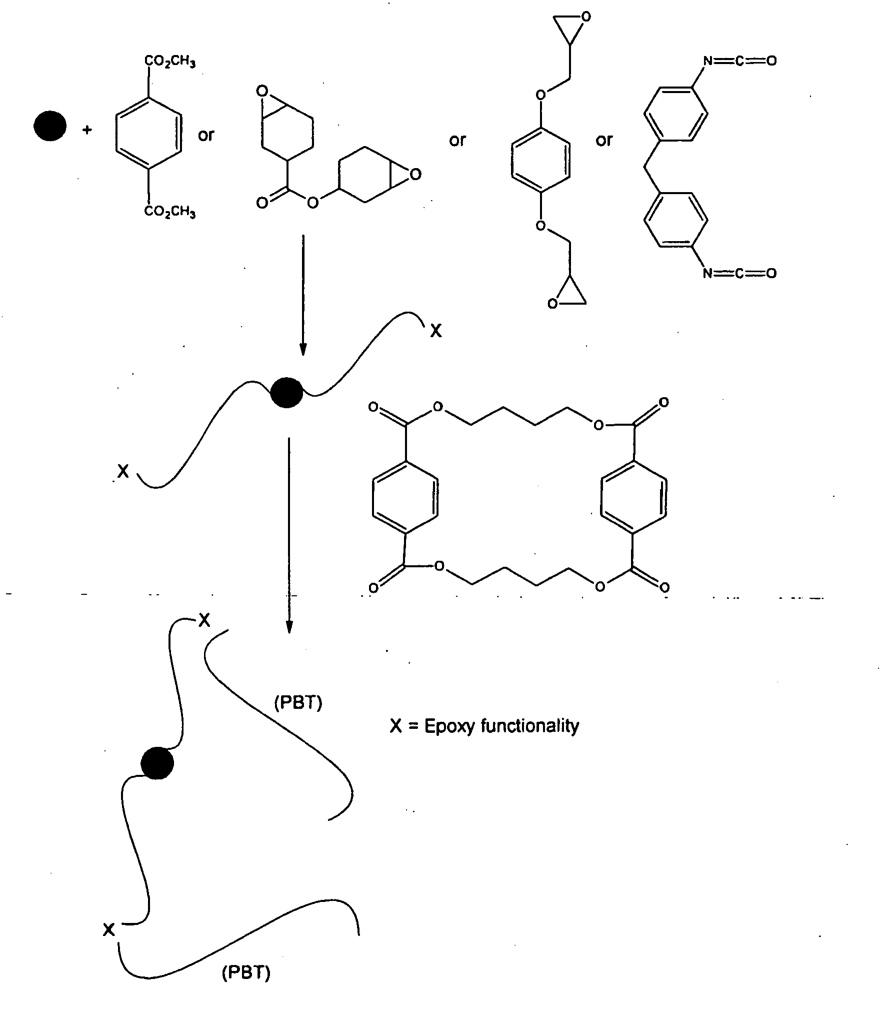

As an illustration of an impact modifier material useful in the matrix resin, the core shell impact modifier material preferably possesses the following qualities:
(1) The composition of the core material preferably has a low Tg core, preferably, less than -40° C. For example, compositions of the core may include polybutadiene which has a Tg of -80° C; or polyacrylate which has a Tg -40° C.
(2) The shell material is preferably compatible with the matrix resin. For example, the shell material may be polymethylmethacrylate (PMMA) which is compatible with a polyester matrix resin. More preferably, the shell material is reactive with the end groups of the matrix resin. For example, the shell material is preferably reactive with the acid or hydroxyl end groups of the polyester matrix resin (an epoxy containing shell, composed of a glycidyl methacrylate copolymer). The compabibility or reactivity of the shell material allows the impact modifier to be dispensed in the matrix resin predominately as discrete single spheres.
(3) The core preferably has a particle size of between 0.1 micron and 2 microns to provide improved ductility via available crazing and/or yielding mechanisms.
(4) The impact modifier particle distribution is preferably of a size to allow processing and flow for example through the thermal spray process. Preferably, the matrix materials such as CBTO and the core shell modifier may be premixed in a melt process followed by grinding to an appropriate particle size distribution for processing.

A composite comprised of CBTO, glass fiber and a core shell modifier provides a tough composite system. Such a system may be used in end applications such as automobile parts and other durable goods.

Nano sized inorganic particles can be incorporated into the prepreg composition. The nano particles may be dispersed in the matrix resin to provide a composite article with a superior balance of stiffness, toughness, heat resistance and dimensional stability in comparison to conventional reinforcement strategies.

For example, utilizing CBTO as the matrix resin, the nano particles may be dispersed in the CBTO and may enhance the physical properties of CBTO. This dispersion of nano particles into CBTO is compatible with the operating parameters of the thermal spray prepreg process, and can improve the physical properties of the articles fabricated by this process.

A method includes a unique method for preparing a prepreg thermoplastic composition by combining a CBTO intercalated organoclay with reinforcing fibers via the thermal spray process. This method provides a mechanism to create a prepreg which when molded at sufficient temperature to enable polymerization of CBTO will form a composite that is reinforced with nano particles and larger scale reinforcing filler.

Generally, the process involves intercalating (swelling) a layered clay with molten polybutylene terephthalate cyclic oligomers. The oligomers are then polymerized to produce a composite. Reinforcement of PBT with specific organo clay systems of the present invention is directed to the use of functional quaternary ammonium salts that can initiate PBT polymerization from the clay surface. This leads to improved clay dispersion and composites with improved physical properties such as modulus and heat resistance. Additionally, the use of shear during the production of these composites improves the final properties of the resultant composites, due to improved dispersion of the filler. These materials have heat resistance/stiffness properties that are superior to unmodified PBT and previously described nanocomposites made with unreactive clays.

As an illustration of this aspect of the present invention a schematic is shown as follows:

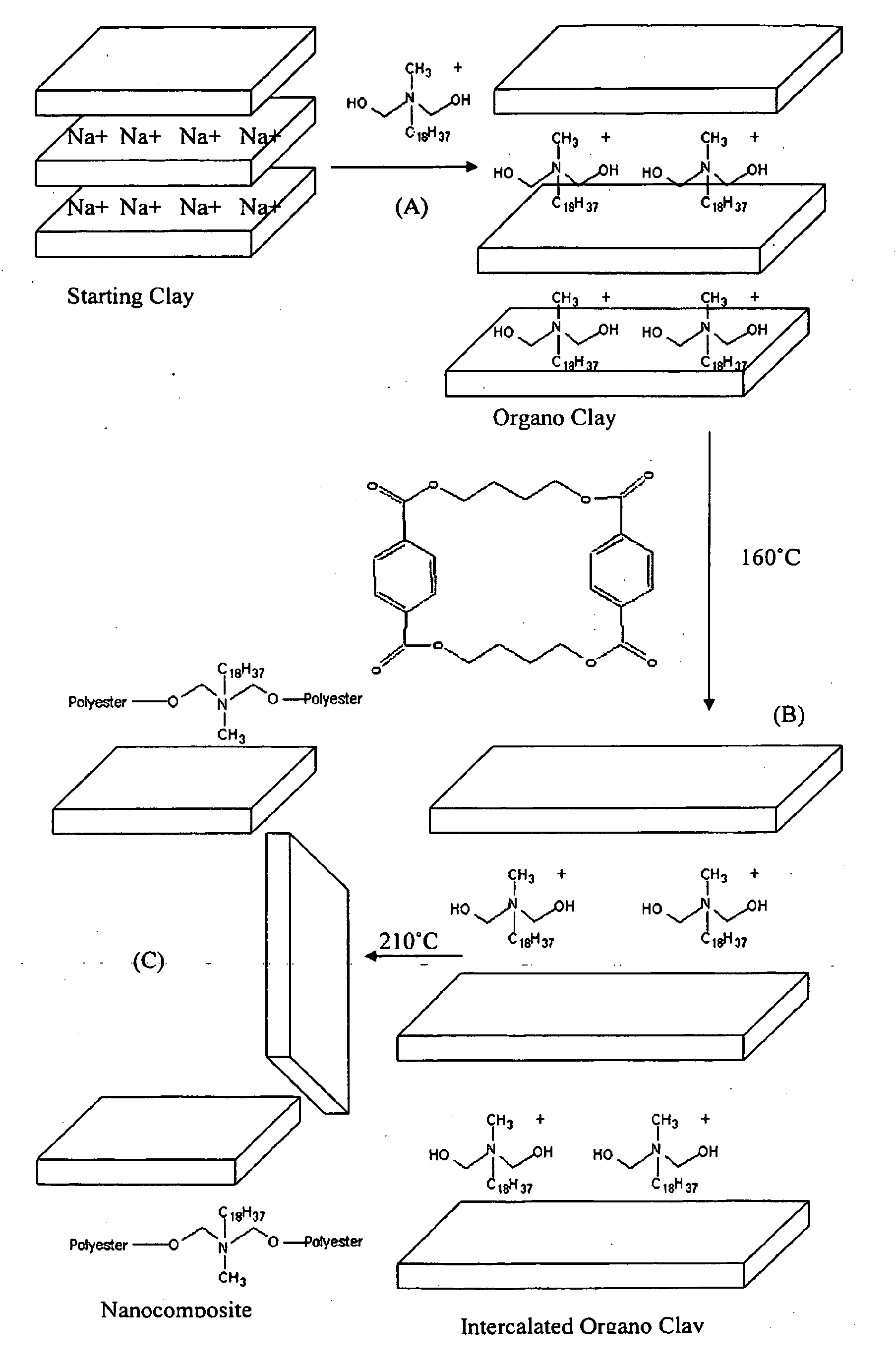

In the schematic above, A is the organo clay, B is the intercalated clay and C is exfoliated clay, some of which is grafted to PBT. This aspect is directed to the use of the CBTO intercalated organo clay as illustrated by point (B) in the schematic above as a feedstock for the thermal spray process. During thermal spray processing, the CBTO intercalated organoclay fills the interstitial spaces between large scale reinforcing fibers. The prepreg is molded at a temperatures between 160 °C and 260 °C, preferably around 200 °C that promotes polymerization of CBTO with the net result being a bicomponent reinforced CBTO based composite. The molding temperature may vary depending upon the catalyst, the nano, and the nucleation system used.

The process of producing the prepreg of a complex configuration of the present invention includes depositing, for example by spraying the reinforcing fibers preferably chopped to a desired size, toward a perforated screen which is in the complex shape of the article to be fabricated. A blower behind the perforated screen pulls air through the screen and holds the fibers in place. Concurrently or subsequently, a matrix resin such as a thermoplastic or a thermoset matrix resin, in the form of a powder or fiber, is sprayed toward the screen to contact and combine with the reinforcing fibers. The proper fiber/resin ratio used is dictated by part design of matrix resin and reinforcing fiber required for a final composite article. The ratio of fiber/resin can also be varied within the part by design to meet the local stress requirements of the part.

A key to the process of producing the prepreg of the present invention is the heat that is applied to the matrix resin to bond the resin to the fiber at the surface of the article on the screen. The temperature is generally from 125 °C to 250 °C, and preferably from 150 °C to 225 °C. This forms the uniform skeletal structure or article referred to herein as the "prepreg" which does not block air flow and combines the fiber and resin to hold its shape.

The heat source used to provide the heat may be for example a thermal heat spray gun utilizing a flame or a hot gaseous material such air or an inert gas such as nitrogen. Any other well known heat source may be used in the present invention which is sufficient to melt the matrix resin such as for example an electrical or dielectrical heater and induction heater.

In one embodiment of the present invention, the matrix resin is sprayed onto the perforated screen surface concurrently with the reinforcing fibers through a thermal spray gun or other heat source to melt the resin. As the molten resin contacts the screen surface the resin then solidifies onto the fiber at the screen surface.

In an alternative embodiment of the present invention, the matrix resin is sprayed onto the perforated screen surface concurrently with the reinforcing fibers; and the resin and fibers are bonded together at the screen surface with a heat source disposed at or near the screen surface.

In yet another embodiment of the present invention, all or a portion of the matrix resin is sprayed onto the perforated screen surface subsequent to spraying the reinforcing fibers, either on the perforated screen or in a separate operation.

In yet another embodiment, additional heat may be applied after the deposition of fiber and resin to further consolidate the prepreg. Also, a second screen may be placed over the top of the original screen to apply pressure to the prepreg while heat is applied for further consolidation.

In yet another embodiment of the present invention, a reinforcing fiber surfacing veil may initially be placed on the screen to prevent the resin from passing through the screen and to improve the surface characteristics of the molded part. The surfacing veil may be cut from rolled goods and placed onto the screen or sprayed as chopped fibers onto the screen.

A thermal heat spray gun utilizing a hot inert gas can be used to heat and melt the matrix resin during the spraying process. The use of an inert gas, instead of a flame, as a heat source to fabricate thermal spray prepregs gives the unexpected benefit of reduced oxidation or deactivation of the catalyst/resin mixture during the processing of the resin system. For example, in the processing of CBTO, the use of the inert gas as a heat source results in a CBTO resin system that polymerizes to a higher molecular weight for example from 40,000 to 200,000; and conversion at a reduced cycle time for example from 90 minutes to 30 minutes. The physical properties such as for example toughness and color of the resulting composite part are also improved when an inert gas is used instead of a flame in the thermal heat gun. Also, by eliminating the flame, powder resin particles do not burn up in the process, resulting in a resin yield improvement for example 10 percent.

A piece of reinforcing fabric containing fiber reinforcement (and optionally matrix resin) may be incorporated into the prepreg. The reinforcing fabric may be added to one or both surfaces of the screen. The reinforcing fabric may be added to the entire surface of the screen; or to portions of the screen, for example, sections of reinforcing fabric may be added to certain areas of the screen to provide additional reinforcement in a specific area as designated by the part design. The reinforcing fabric may be added to the prepreg either before or after the spraying of the fiber and resin. The reinforcing fabric may be added to prepreg after the prepreg is formed. The prepreg can be first removed from the screen, then the reinforcing fabric is applied to the screen, and then the prepreg is replaced on the screen to complete the prepreg. The reinforcing fabric may contain a predetermined amount of matrix resin in the fabric before the fabric is used as described above.

Additional fabric reinforcement is added to the prepreg over one or both surfaces of the prepreg to improve the physical properties of the final article when compression molded. The reinforcing fabric usually consists of bundles of woven or stitched reinforcing fibers such as glass or carbon, Kevlar, or Spectra fiber. The reinforcing fabric may be added over the entire surface or selectively placed over highly stressed areas of the part as dictated by part design. The fabric sections are normally cut from rolls of fabric and placed onto the prepreg while on the screen with suction applied. Then heat is applied to melt the existing resin in the prepreg to bond the fabric to the prepreg. Fabric may be applied to the screen side of the prepreg either before spraying the prepreg or by removing the prepreg from the screen, applying the fabric to the screen, and replacing the prepreg. Then heat would be applied, with or without suction, to bond the fabric in place. The matrix resin necessary for impregnating the fabric during compression molding would either be incorporated in the sprayed fiber prepreg or be present in the fabric prior to applying to the sprayed prepreg.

The above describes a process in which fiber and resin are sprayed toward a 3-dimensional perforated screen with suction applied to produce a near net shape prepreg that can be compression molded into a composite article. Certain matrix resin materials such as CBTO must be dried to moisture levels below those normally occurring at ambient conditions to properly polymerize. For example, the resin should not contain more than 0.05 percent moisture. In many cases, it is not only the matrix resin that must be dried but also the reinforcing fiber. The surface of the reinforcing fiber may attract over 1 percent moisture from exposure to ambient air that may adversely affect either the polymerization of the matrix resin or affect the quality of the composite article in some other manner. A new method of drying thermal spray prepregs has been developed in which hot dry gas is passed through the prepreg in an enclosed fixture. This method takes advantage of the porous nature of the prepreg. The fixture surrounds the prepreg and has evenly spaced orifices on the inlet side and also possibly the outlet side of the prepreg to force the hot gas through the prepreg in an even manner. Extremely high drying rates can be achieved due to high diffusion rates of the moisture form the prepreg to the gas.

The drying operation may take place directly prior to the molding of the prepreg to prevent re-absorption of moisture. Alternatively, the dried prepreg may be sealed in a bag or other container that is impervious to moisture and stored. The prepreg may be removed from the bag for molding and the bag may be reused. Alternatively, the bag may be constructed of material that is compatible with the matrix resin when molded, such as a polyester film is to CBTO, and the bag may be molded along with the prepreg to become a surface film for the molded composite article.

Once the prepreg is produced, one embodiment of the present invention includes applying a thermoplastic surface film to the thermally sprayed prepeg. A surface film may provide several enhancements, such as improved surface quality, UV resistance, corrosion resistance, paint adhesion, primer elimination, or molded-in color. In certain matrix resins such as CBTO, a polyester thermoplastic surface film would react with the CBTO, thus bonding the surface film to the matrix resin. An example of the polyester thermoplastic film used in the present invention may be for example Mylar*.

The thickness of the surface film may be, for example, from 0.025 mm to 0.25 mm.

The surface film would normally be cut to fit the shape of the part to be molded and would be assembled with the prepreg at the compression mold. In the case of a 3-dimensional shaped part, the surface film could consist of several individual sections of film or be cut in such a manner that when placed into the mold, it covers the part surface. In another embodiment, a stretchable film could be used in the case of 3-dimensional parts. In yet another approach, the surface film could be thermoformed in a separate operation to fit the surface of the part.

Once a near net shape prepreg is produced for compression molding into a composite article, a fibrous thermoplastic surface veil may be applied to the thermally sprayed prepreg. The fibrous thermoplastic surface veil is created, for example, by spraying a plurality of filaments onto the surface of the prepreg. In matrix resins such as CBTO, a thermoplastic surface veil, for example such as a polyester veil, preferably reacts with the CBTO, thus bonding the surface veil to the matrix resin. A sprayed veil preferably conforms to 3-dimensional surfaces, giving a smooth appearance. A surface veil could provide several enhancements, such as improved surface quality, UV resistance, corrosion resistance, paint adhesion, primer elimination, or molded-in color.

The fibrous thermoplastic surface veil could be sprayed from fibrous yarn onto either side of the prepreg as the prepreg is being formed. It could be sprayed onto the perforated screen prior to the spraying of the reinforcing fiber and the matrix resin or it could be sprayed over the top of the prepreg after the spraying of the reinforcing fiber and matrix resin. Another option would be to spray the surface veil in a separate operation and held together with either a small amount of matrix resin or it could be partially or completely melted to bond the fibers together.

While the above describes preparing a 3-dimensional prepreg, the present invention may also include a method of dispersing a matrix resin in a powder form with fiber reinforcement without the need for solvents or slurries to disperse the resin to produce a formable fiber prepreg for use in the manufacture of composite parts. For example, a sheet of formable fiber prepreg is produced by simultaneously depositing resin and fiber onto a perforated screen through with suction is applied. In another embodiment, the prepreg composition may be distributed onto a flat surface such as a belt, heated and then consolidated from a flat sheet. Heat is also applied simultaneously to the powder resin and onto the surface of the deposited material to at least partially melt the resin and bond it to the fiber to form a porous prepreg. The manufactured prepreg may be formed into 3-dimensional shapes and compression molded to produce a fiber reinforced structural composite part.

The prepreg may be produced in a continuous process to make either sheets or rolled good prepreg material. Alternatively, the prepreg may be produced in a batch process to make sheets of a designated size. The batch-manufactured sheets may be of other shapes than rectangular, based on the design requirements of a designated part. In this variation, tailored blanks may be produced, that when formed into the 3-dimensional shape of the composite part, produce very little (less than 10 percent) perimeter offal scrap prepreg.

The prepreg produced as described above may be combined with other structures with the objective of obtaining an improved final composite product. For example, in another embodiment of the present invention, rib-shaped structures greatly improve the global stiffness of a structural composite part design. However, from a manufacturing point of view, the rib-shaped structures are labor intensive to incorporate into an integrated structure. Typically, the rib-shaped structures are bonded to the primary structure in a secondary operation. In some cases of compression molding, fiber and resin can flow down into rib sections, but the dimensions of the rib design are limited and engineered fabrics with directional fibers can not be used.

Thus, one embodiment of the present invention involves combined molding of a thermal spray prepreg with a pre-fabricated engineered fabric prepreg of the desired construction using the same matrix resin for both prepregs. By molding the prepregs together, the two structures would become integrated without the need for secondary bonding.

Reinforcing rib-shaped prepregs of constant cross section could be fabricated in a continuous operation, similar to pultrusion through a die, but without complete cure of the matrix resin. The resin could be applied to the fabric by several means. It could be pre-impregnated into the fabric or tow, co-mingled with the reinforcing fiber, or added in the process prior to the die with either powder or liquid. The rib prepreg would be flexible enough to be shaped into a curved profile if required. If a more complex geometry were required, such as a grid, the rib section prepreg could be made in a batch operation in a mold. All or part of the necessary matrix resin could be placed into the rib prepreg. If, for manufacturing reasons, it is desirable to incorporate less than the full amount of resin into the rib prepreg, the extra amount needed could be dispersed into the thermal spray prepreg and would flow where needed in the compression mold.

Using the process described above in which fiber and resin and any other optional components are sprayed toward a 3-dimensional perforated screen with suction applied, a near net shape prepreg is produced that can be compression molded into a composite article.

The process of producing a composite article from a prepreg generally includes placing one or more prepregs into a mold and consolidating the prepreg(s) into a composite article under pressure and elevated temperatures. Generally, the temperature is from room temperature (25 C) to 200 C; and the pressure is from 0.1 MPa to 0.7 MPa.

While the prepreg may be used in a compression mold "as is" and without modification or additional matrix resin, in one embodiment additional matrix resin powder may be sprinkled below, between and above a plurality of prepregs in the mold.

If the matrix resin is a thermoplastic, the prepreg is heated, consolidated, and then cooled to solidify the resin.

If the matrix resin is a thermoset, the prepreg is heated, consolidated, and then crosslinked to solidify the resin. The crosslinking is carried out using a crosslinking agent which is added to the prepreg composition as part of the thermoset resin formulation. The crosslinking agent may include for example typical amine, anhydride, phenolic hardeners, or mixtures thereof.

The process of producing the composite article may be carried out at rapid rates such as for example at less than 60 minutes, preferably from 1 minute to 30 minutes, and more preferably from 0.5 minute to 5 minutes at low molding pressure for example less than 3.4 MPa, preferably from 0.1 MPa and to 2.4 MPa, and more preferably from 0.1 MPa to 0.7 MPa, and with minimal offal scrap for example less than 25 percent, preferably from 2 percent to 20 percent, and more preferably from 3 percent to 10 percent offal scrap.

The process of producing the composite article operates at much lower pressures for example from 0.1 MPa to 0.7 MPa than traditional compression molding processes which operate at for example 7 MPa to 10 MPa; and produces a better quality composite much closer to the design requirements of the part due to a minimum of fiber movement in the mold and the ability to purposefully vary the fiber content in the part when desired.

Also, compared to resin injection processes, with the use of the process of the present invention, the use of resin injection equipment is eliminated.

In addition, offal scrap is minimal for example less than 25 percent, preferably from 2 percent to 20 percent, and more preferably from 3 percent to 10 percent offal scrap compared to fabric which must be cut from rectangular sheets, thus the term "near net shape."

A prepreg, or a portion thereof, such as perimeter offal or overspray, can be recovered and recycled back into the thermal spray process. In order to reduce the waste from the thermal spray near net shape prepreg process to very low levels, imperfect prepregs, perimeter offal, overspray, or other forms of otherwise scrap fiber and resin can be recovered and recycled back into the thermal spray process. Recycling is accomplished by reducing the size of the waste down to a form that can be sprayed in a uniform manner and held in place by the suction provided through the perforated prepreg screen. Reducing the size of the waste is accomplished by a combination of methods such as shredding and separating down to particles close in nature to the original raw materials. Alternatively, the waste may be ground down to a smaller particle size that can be sprayed into a prepreg. The particle size is generally from 10 microns to 500 microns.

The following examples are provided merely to illustrate the present invention and should not be interpreted as limiting the present invention in any way. Unless stated otherwise, all parts and percentages are given by weight.

Various equipment and raw materials used in the following Examples are described as follows:
(1) The flame spray device is a Thermal Polymer Systems Flame Spray Gun - Model F311-FX-P with accompanying eductor air jet, sold by Thermal Polymer Systems.
(2) The volumetric feeder device is a K2 Volumetric Feeder - Model K2VT20, sold by K-Tron Soder Corp.
(3) The reinforcing fibers feeding device is an Aplicator Glass Chopper Gun - Model 52021 which provides fibers of a length of 42 mm, sold by Aplicator.
(4) The blower on the screen is a Twin City Fan and Blower Co. - Model TBA 1410P7, sold by Twin City Fan and Blower Co.
(5) The matrix resin applicator device is a Leister Electric Hot Air Gun - Model 10,000S/10KW, sold by Leister.
(6) The foraminous screen is a prepregging screen with a16 gauge perforated plate, 3.175mm diameter holes, 4.763mm centers triangular pitch.
(7) The glass veil is an Owens Corning M524-C64 Glass Veil, sold by Owens Corning.
(8) Another glass veil is Surmat SF 100 / 40 g/m2 from Nicofibers, Inc.
(9) The reinforcing fibers are prepared from an Owens Corning 359A-AA-208 Glass Roving, sold by Owens Corning.
(10) The reinforcing glass fiber fabric is a TF-22, a tri-axial knitted glass fabric from Fiber Glass Industries, Inc.
(11) The hot air source for the prepreg compaction experiments is a Model HT 103BS Moen Heating System from Heat Transfer Technologies, Inc.
(12) CBTO stands for cyclic polybutylene terephthalate oligomer sold by Cyclics Corp. under the tradenames of XB3C, XB3-CA4, XB2-CA4, and XB2HC-CA4.

### Example 1

### A. Preparation of a Prepreg

A prepreg composition was sprayed onto a flat perforated screen 502 mm x 648 mm. A blower on one side of the screen provided an initial air velocity of 304 m/minute. A single layer of glass veil was first applied to the screen. Glass fiber was fed, chopped and sprayed using a chopper gun evenly over the prepreg screen at 200 g/minute. Concurrently, CBTO powder resin XB3C(250-600 micron particle size) was sprayed using a flame spray gun with a volumetric feeder to meter the powder at 240 g/minute through the flame spray gun in such a manner as to mix evenly with the glass fiber at the screen surface. These operations continued for 250 seconds. Additional heat from the thermal spray gun was applied to the prepreg for an additional 60 seconds. The air velocity through the screen after completion of the spraying was 195 m/minute. The prepreg weight was 1814 g.

The prepreg was dried for 4 hours at 85 °C inside a sealed foil bag with vacuum applied in a convection oven.

### B. Preparation of a Composite Article

A steel compression mold of the same dimensions as the screen used in Part A above was placed in a vertical press. The mold had a cavity in the bottom half and a plug in the top half that fit into the cavity. The mold provided a part thickness of 2.65 mm. An o-ring surrounded the cavity on the bottom half and vacuum was applied through a port in the side. The mold was equipped with oil heating and was heated to 190 °C. The prepreg was placed into the cavity and the press closed with a pressure applied of 1.3 MPa. The temperature and pressure were applied for 1 hour. Then the press was turned off and the temperature cooled to 40 °C before demolding.

The resulting composite article weighed 1521 g and was visually completely filled out with only a small amount of surface porosity. The calculated glass content was 53 wt percent.

### Example 2

### A. Preparation of a Prepreg

This example demonstrates the prepreg manufacture and molding of a 3-dimensional shaped part. The part was the midgate for an automobile, a part that is produced with a structural reaction injection molding (SRIM) process. The part design has some complex features such as corrugation and a folded edge completely around the part. Approximate dimensions were 137 cm x 64 cm x 3 mm with an approximate surface area of 0.97 m².

A prepreg screen was fabricated to fit the part. The initial air velocity was 219 m/minute. A single layer of glass veil was first applied to the screen. Glass fiber was fed, chopped and sprayed using a chopper gun evenly over the prepreg screen at 200 g/minute. Concurrently, CBTO power resin (250-600 micron particle size) was sprayed at 240 g/minute through the flame spray gun in such a manner as to mix evenly with the glass fiber at the screen surface. These operations continued for 743 seconds. Additional heat from the thermal spray gun was applied to the prepreg for an additional 180 seconds. The final air velocity through the screen after completion of spraying was 172 m/minute. The prepreg weight was 5455 g.

The prepreg was dried for 4 hours at 85 °C inside a sealed foil bag with vacuum applied in a convection oven.

### B. Preparation of a Composite Article

A steel compression mold of the same dimensions as the screen used in Part A above was placed in a vertical press. The mold had a cavity in the bottom half and a plug in the top half that fit into the cavity. The mold provideda part thickness of approximately 3 mm. The mold had a shear edge to trim the offal upon mold closure. An o-ring surrounded the cavity on the bottom half. No vacuum was applied. The mold was equipped with oil heating and was heated to between 222 °C -to 228 °C. The prepreg was placed into the cavity and the press closed with a pressure applied of 0.46 MPa. The temperature and pressure were applied for 35 minutes. Then the press was turned off and the temperature cooled to between 155 °C to 157 °C in 35 minutes before demolding.

The resulting composite article weighed 5198 g and was visually completely filled out with only a small amount of surface porosity. The part weighed 5198 g and the offal trimmed by the shear edge weighed 204 g (or 4 percent offal). Samples were cut from various portions of the part and analyzed for glass content. The glass content varied from 45 wt percent to 74 wt percent with an average of 60 wt percent over 11 samples due to the manual deposition method. However, all of these areas were completely wet out, which would not be possible in the SRIM process due to flow patterns that would bypass the high glass content areas. Mechanical properties were also measured from samples prepared from the part. The tensile modulus of the samples averaged 14641.9 MPa and the tensile strength averaged 166.5 Mpa, averaged over two samples. (A midgate was also molded with the XB2HC-CA4 resin in 5 minutes at isothermal conditions.)

### Comparative Example A

An attempt was made to produce a prepreg consisting of 50/50 fiber/resin by weight in situ on a perforated screen (502 mm X 640 mm). A solid epoxy powder coating formulation consisting of D.E.R.™ 662UH (a bisphenol type solid epoxy resin with an EEW of 700)/D.E.H. 84 (a [phenolic curing agent with an EW of 245) at a ratio of 100 to 38, was used as the matrix resin. A prepreg weighing 1070 g and consisting of 10 wt percent of the matrix resin was fabricated first as described in Example 1 on the 502 mm x 640 mm screen. Then an equivalent weight of dry powder was sprayed onto the prepreg to achieve the desired 50 wt percent of resin. The particle size of the powder was from 210 microns to 600 microns. A surfacing glass veil was initially placed on the screen surface to prevent excessive resin powder loss through the screen. The powder spray was stopped after 200 g, 600 g and 1000 g of the total and weighed for yield of weighed powder gain/applied powder. The yield dropped from 77 percent to 54 percent to 33 percent in successive passes. After the 1000g of powder had been sprayed, only 501g remained in the prepreg. The yield loss was due to powder lost through the screen and bouncing off the screen. The initial air velocity at the screen surface was 235 m/minute. As more was added the yield continued to drop due to a decrease in air flow. After approximately 300 g of the powder had been sprayed onto the prepreg, the air velocity dropped below 150 m/minute which is the minimum air flow necessary to capture the powder. This was due to filtering of the powder onto the veil surface. This Comparative Example A experiment demonstrated that the addition of dry powder would not be successful in producing the desired prepreg in situ on the perforated screen.

### Example 3

### A. Preparation of a Prepreg

A prepreg composition was sprayed onto a flat perforated screen 502 mm x 648 mm. A blower on one side of the screen provided an initial air velocity of 235 m/minute. A single layer of glass veil was first applied to the screen. Glass fiber was fed, chopped and sprayed using a chopper gun evenly over the prepreg screen at 250 g/minute. Concurrently, CBTO powder resin XB2HC-CA4 (150-500 micron particle size) was sprayed with a volumetric feeder to meter the powder at 300 g/minute in such a manner as to mix evenly with the glass fiber at the screen surface. Heat was applied concurrently with hot air from a Leister electric heat source. These operations continued for 200 seconds. Additional heat from the Leister heat source was applied to the prepreg for an additional 60 seconds. The air velocity through the screen after completion of the spraying was 183 m/minute. The prepreg weight was 1840 g.

The prepreg was dried for 12 hours at 85 °C inside a sealed foil bag with vacuum applied in a convection oven.

### B. Preparation of a Composite Article

A steel compression mold of the same dimensions as the screen used in Part A above was placed in a vertical press. The mold had a cavity in the bottom half and a plug in the top half that fit into the cavity. The mold provided a part thickness of 2.65 mm. An o-ring surrounded the cavity on the bottom half and vacuum was applied through a port in the side. The mold was equipped with oil heating and was heated to 180 °C. The prepreg was placed into the cavity and the press closed with a pressure applied of 1.3 MPa. The temperature and pressure were applied for 5 minutes. Then the press was opened and the part removed.

The resulting composite article weighed 1535 g and was visually completely filled out. The calculated glass content was 52 wt percent.

### Example 4

In this example mineral particles were added to a prepreg composition containing PBT in the presence of reinforcing fiber. Samples were prepared by mixing CBTO powder with talc mineral powder at talc concentrations of 0.5 percent, 1 percent, 2 percent, 5 percent, and 10 percent. The CBTO and talc powders were thoroughly mixed to form a homogeneous mixture. The mixture was sprayed through the thermal spray process using a flame gun heat source as described in Example 1. Simultaneously, chopped fiberglass was sprayed toward the perforated screen where the melted resin and glass combined to form a prepreg. The operating parameters were as follows:
Prepreg Fabrication:
   CBTO: XB3-CA4/talc mixture - 240 g/minute
   Glass: Owens Corning 359A-AA-208 - 200 g/minute
   Spray Time: 310 seconds
   Part Size: 502 mm x 648 mm x 2.8 mm thick
Part Molding: CBTO Curing - 190°C

### Example 5

This example illustrates the use of an inert gas in the process of the present invention. (The use of hot air was found to be as effective as hot nitrogen).

Samples of uncatalyzed CBTO resin were sprayed at 240 g/minute through a flame gun and through a hot nitrogen gun into glass bottles, respectively. Acid content was measured by acid titration. Acid is known to inhibit the proper polymerization of the CBTO resin. Higher acid levels were present in all of the flame sprayed resins. The presence of the higher acid levels may also indicate some catalyst deactivation mechanism.

The products used in this example were XB0-CA4, XB0-CA4.5, and XB0-CA5 which contained various anti-oxidant levels.
Acid Level Results:
   Flame Sprayed: 0.55-0.65 meq/kg
   Hot Nitrogen Sprayed: <0.4 meq/kg
Prepreg Fabrication Experimental:
   Flame gun: Thermal Polymer Systems Model F311FX-P qith a Propane/oxygen fuel source
   Hot nitrogen gun: Leister 10000 Heat Source with a Plant nitrogen gas source
   CBTO XB3-CA4 - rate 240 g/minute
   OCF 359A-AA-208 glass roving rate 200 g/minute Aplicator chopper gun
   42 mm fiber length
   250 second spray time
   Panel size: 502 mm x 648 mm x 2.85 mm thick
   Panel cut to smaller pieces to fit various molds

### Dielectric Response Results:

Thermal spray prepregs fabricated with both a flame and nitrogen were compression molded in a tool (319 mm x 319 mm x 3mm thick) that included a dielectric sensor. Dielectric response has been proven to be a good indicator of polymerization of CBTO resin.

The prepreg exhibited a much sharper polymerization response and achieved a higher value than the flame sprayed prepreg, demonstrating a much more active resin system.
Flame Sprayed:
   Time at Maximum Polymerization Rate - 2000 seconds
   Maximum Dielectric Response - 9.6 Log (Ion Visc)
Nitrogen Sprayed:
   Time at Maximum Polymerization Rate - 1000 seconds
   Maximum Dielectric Response - 10.0 Log (Ion Visc)

### Visual Appearance Results

The test panel molded from the flame sprayed prepreg had a much darker appearance than the panel molded from the nitrogen sprayed prepreg. The darker color was attributed to degradation of the polymer in the flame.

### Molding Cycle Time

A flame sprayed prepreg was molded at 190°C for 40 minutes. Upon opening the mold, it was evident that the composite part was not fully polymerized as noted by a translucent color that eventually turned the normal opaque color after several more minutes in the open mold.

A hot nitrogen sprayed prepreg was molded at 190°C for 30 minutes. The part was fully cured upon demolding as observed by the normal opaque color.

### Example 6

In this example a reactive core shell material was added to a prepreg composition to show the impact modification of PBT in the presence of reinforcing fiber. Samples were prepared by mixing CBTO powder with powdered epoxy functional impact modifier in an 80/20 weight ratio and thoroughly mixed to form a homogeneous mixture. The mixture was sprayed through the thermal spray process using a hot nitrogen stream as the heat source. Simultaneously, chopped fiberglass was sprayed toward the perforated screen where the melted resin and glass combined to form a prepreg. The operating parameters were as follows:
Prepreg Fabrication:
   CBTO - XB3-CA4 - 240 g/minute
   Core Shell Particle - Atofina D400R - 60 g/minute
   Glass - Owens Corning 359A-AA-208 - 250 g/minute
   Spray Time - 175 seconds
   Part Size - 502 mm x 648 mm x 2.8 mm thick
Part Molding - CBTO Curing
   190°C for 35 minutes
   125,500 kg/sq. meter pressure

### Example 7

In this example a non-reactive core shell material was added to a prepreg composition to show the non reactive impact modification of PBT in the presence of glass fiber. Samples were prepared by mixing CBTO powder with powdered impact modifier in an 80/20 weight ratio and thoroughly mixed to form a homogeneous mixture. The mixture was sprayed through the thermal spray process using a hot nitrogen stream as the heat source. Simultaneously, chopped fiberglass was sprayed toward the perforated screen where the melted resin and glass combined to form a prepreg. The operating parameters were as follows:
Prepreg Fabrication:
   CBTO - XB3-CA4 - 240 g/minute
   Core Shell Particle - Atofina D400 - 60 g/minute
   Glass - Owens Corning 359A-AA-208 - 250 g/minute
   Spray Time - 175 seconds
   Part Size - 502 mm x 648 mm x 2.8 mm thick
Part Molding - CBTO Curing
   190°C for 35 minutes
   '125,500 kg/sq. meter pressure

### Example 8

In this example an epoxide resin was added to a prepreg compositon to enhance molecular weight of PBT in the presence of reinforcing fiber. Samples were prepared by mixing CBTO powder with solid epoxy rein in a 99/1 weight ratio and thoroughly mixed to form a homogeneous mixture. The mixture was sprayed through the thermal spray process using a hot nitrogen stream as the heat source. Simultaneously, chopped fiberglass was sprayed toward the perforated screen where the melted resin and glass combined to form a prepreg. The operating parameters were as follows:
Prepreg Fabrication
   CBTO - XB3-CA4 - 237.6 g/minute
   Epoxy - D.E.R. 662 UH 2.4 g/minte
   Glass - Owens Corning 359A-AA-208 - 250 g/minute
   Spray Time - 175 seconds
   Part Size - 502 mm x 648 mm x 2.8 mm thick
Part Molding - CBTO Curing
   190°C for 35 minutes
   125,500 kg/sq. meter pressure

### Example 9

A sheet of Mylar polyester film was placed into a compression mold and then a thermal spray prepreg prepared for example as described in Example 1 above, was placed in the compression mold. The pieces were compression molded together at a temperature of 180° C and a pressure of 1.3 MPa. The polyester film was firmly bonded to the resulting composite part. Good bonding was affirmed when the attempted delamination of the film resulted in reinforcing fiber pullout.

### Example 10

In an effort to determine the proper conditions to compact a prepreg of the XB3-CA4 material and chopped glass, a disc shaped section of prepreg 38mm in diameter and weighing 4.95g was cut from a larger sample of approximately one half glass and one half XB3-CA4. The initial sample thickness was 10.0 mm. The sample was placed on a piece of onto a perforated metal screen on top of a pipe fitting that was connected to the discharge of the Moen heating system. Another screen and a weight with a hole in the middle were placed freestanding on top of the prepreg sample. A thermocouple was placed in the middle of the prepreg sample. Air flow to the system was regulated to 77 1/min. The temperature controller on the system set the discharge air temperature to 171C. Due to heat losses in the discharge piping, the prepreg temperature only reached 121C in 5 minutes. The temperature and pressure consolidated the prepreg without attaining a high enough temperature to initiate the reaction of the resin. The final prepreg thickness was 5.25 mm. Calculations for the sample show that the fully consolidated part would be 2.52 mm. Therefore, the void fraction of the prepreg was reduced to 48 percent with these consolidation conditions.

### Example 11

In an effort to determine the molding pressure required to achieve the desired fiber content, a small steel mold was constructed consisting of a base plate with a cavity with the dimensions of 40mm diameter and 13mm thick. A disc shaped section of prepreg 38mm in diameter and weighing 5.56g was cut from a larger sample of approximately one half glass and one half XB3-CA4. The sample was placed into the cavity of the mold. A rod 37mm in diameter and 50mm long was placed on top of the prepreg sample and a weight of 11.4 kg was placed on top of the rod. The resulting pressure on the sample was 1.007 atm. The entire assembly was placed into an oven and heated to 180C for 90 minutes. As the resin melted, it was displaced from the mold between the rod and the mold cavity and spilled over the top. The resulting cured composite sample beneath the rod was analyzed for glass content via burnout of the resin and found to contain 68.8 wt percent glass.

### Example 12

Prepregs were prepared and molded using the same conditions as Example 3 above except at a 10 minute mold time using two different formulated epoxy resin systems as shown in the table below.

| Formulation | A | B |
|---|---|---|
| DER 6615 | 100 | |
| DER 662 | | 100 |
| CG 1200 (DICY) | | 3 phr |
| P 101 (Imidazole) | 0.5 phr | 1 phr |
| DEH 84 | 34 phr | |

The mold did not close completely on the prepreg made from System A. The material gelled very rapidly and the exotherm discolored the final part but fibers were well wet out throughout the part. The prepreg from System B completely closed in the mold and did not discolor. The fibers were well wet out throughout the part.

### Example 13

A flat prepreg with an areal weight of 2137 g/m2 and a size of 150 cm x 75 cm was prepared in similar fashion to Example 3. It was laid across the cavity of the midgate mold with the corners cut off to clear the centering rods between the mold halves. The mold was closed as before with the shaped prepregs. The molded part was well wet out with no signs of tearing of the prepreg. This example shows that for some 3-dimensional shapes, shaped prepregs are not needed.

### Example 14

This experiment was conducted in an effort to determine the yield of powder resin through the prepreg spraying process. One layer of Surmat 100 SF veil was placed on the 502mm x 648mm perforated screen. The air velocity was adjusted to 244 m/min. Then powder only (XB2HC-CA4 150 -500 micron particle size) was sprayed for 15 seconds at a rate of 296 g/min, along with heat from the Leister heat source for 30 seconds. Only 100 g of powder was retained on the veil for a yield of 68 percent. The experiment was repeated. First the veil was applied. Then glass only was sprayed until an areal weight of 455 g/m2 was achieved. Then powder only (XB2HC-CA4 150 -500 micron particle size) was sprayed for 15 seconds at a rate of 296 g/min, along with heat from the Leister heat source, enough to bind the prepreg together so that it could be removed from the screen and weighed. Then the prepreg was replaced onto the screen and suction reapplied. Powder was applied at a rate of 308 g/min for 30 seconds, along with heat. The prepreg was removed again and out of 148 g sprayed, 141 g remained on the prepreg for a yield of 95 percent. The technique of spraying a small amount of glass before turning the powder on showed a significant improvement in powder yield.

### Example 15

A hybrid composite part of chopped glass and triaxial knitted glass fabric was fabricated using a variation of the process to achieve an improvement in properties. The triaxial fabric was from Fiber Glass Industries, Inc. and contains continuous fibers in the 0 degree, + 45 degree, and - 45 degree directions knitted together into a fabric with polyester thread. The procedure for fabricating the prepreg were as follows: First chopped fibers were sprayed for 29 seconds at a rate of 225 g/min and a powder rate of 300 g/min. Powder spraying continued for another 17 seconds. Then a layer of the triaxial fabric was applied and powder sprayed on top for 17 seconds. This completed one half of the prepreg. The assembly was removed and the other half was completed in the same manner. Both halves were assembled with the chopped fiber to the inside of both halves. The entire assembly was dried and molded as in Example 3. The part looked very good and had the following properties: (I have them in my office).

### Example 16

A rib structure was incorporated into a chopped fiber prepreg part using the following method. A prepreg was sprayed as in Example 3. A section 30 cm x 30 cm was cut out. A section of Owens Corning chopped fiber mat 450 g/m2 was placed onto the perforated screen and suction applied. An equal weight of powder was applied to the mat as above with heat to melt it into the mat. A section of the mat 7.5 cm x 30 cm was cut out and folded in the center of the 30 cm section to form a 1.25 cm raised section of two layers across the entire 7.5 cm section. The strip was placed across the 30 cm x 30 cm prepreg above with the 1.25 cm forming the rib section. Metal bars 7.5 cm x 2 cm were placed on either side of the rib to maintain it perpendicular to the horizontal surface. The entire assembly was placed into an elastic silicone vacuum bag. The bag has a rigid bottom, a seal around the perimeter, and a port to apply vacuum. Vacuum was applied, consolidating the prepreg and pulling the metal bars into the rib. The assembly was put into a conventional oven overnight at 95C. Then it was removed, the vacuum hose was pinched off and cut to maintain the vacuum and the assembly was put into an oven at 180C for 10 minutes. It was removed and allowed to cool before opening the vacuum bag and removing the part. The rib remained intact in the vertical position. Both sides of it were bonded together as was the chopped mat strip to the main prepreg. The structure was then inherently stiffer than a flat prepreg.

## Claims

1. A process for making a near net shape prepreg, suitable for use in preparing a composite article, comprising:
(a) depositing reinforcing fibers in an amount of at least 13 volume percent of the prepreg onto one side of a foraminous screen having a vacuum means positioned on the opposite side thereof which maintains the fibers in position on the one side of the screen,
(b) depositing resin matrix material onto the same side of the foraminous screen as the reinforcing fibers above wherein the vacuum means positioned on the opposite side of the foraminous screen maintains the resin matrix material with the fibers in position on the one side of the screen,
(c) heating the resin matrix material sufficiently to bond the resin matrix material to the reinforcing fibers at the surface of the screen to form a resin and fiber structure,
(d) allowing the resin and fiber structure to cool such that a near net shape prepreg is formed; and **characterized in**
(e) drying the formed prepreg by (i) placing the prepreg in an enclosure having an inlet and an outlet for passing a hot dry gas therethrough, and (ii) passing the hot dry gas through the prepreg in the enclosure.

2. The process of Claim 1 including the step of placing a veil material onto the foraminous screen.

3. The process of Claim 1 including the step of placing a veil material onto the formed prepreg.

4. The process of any one of Claims 1 to 3 wherein the resin matrix material is a cyclic oligomer.

5. The process of any one of Claims 1 to 4 wherein the resin matrix material is cyclic polybutylene terephthalate oligomer.

6. The process of any one of Claims 1 to 5 wherein the reinforcing fiber and resin matrix material is deposited concurrently.

7. The process of any one of Claims 1 to 6 wherein the resin matrix material is deposited onto the screen subsequent to the reinforcing fiber.

8. The process of any one of Claims 1 to 7 including adding a piece of fabric containing fiber reinforcement to at least a portion of the prepreg.

9. The process of any one of Claims 1 to 8 including adding additional resin matrix material to at least a portion of the prepreg prior to placing the prepreg in a compression mold.

10. The process of any one of Claims 1 to 9 wherein the temperature at the screen surface is from about 100°C to about 250°C.

11. The process of any one of Claims 1 to 10 wherein the heating and depositing of the matrix resin material is carried out using a flame spray device.

12. The process of any one of Claims 1 to 11 including the step of contacting the surface of a formed prepreg with a rib-shaped structure and adhering such rib-shaped structure to the prepreg to form a rib-shaped prepreg member.

13. The process of any one of Claims 1 to 12 including the step of heating and pressing the prepreg to form a composite article.

## Patentansprüche

1. Verfahren zur Herstellung eines endformnahen Pregpregs, das zur Verwendung bei der Herstellung eines Verbundgegenstands geeignet ist, mit den folgenden Schritten:
(a) Aufbringen von Verstärkungsfasern in einer Menge von mindestens 13 Vol.-% des Prepregs auf eine Seite eines Lochgitters, auf dessen anderer Seite eine Vakuumeinrichtung positioniert ist, welche die Fasern auf der einen Seite des Gitters in Position hält,
(b) Aufbringen von Harzmatrixmaterial auf dieselbe Seite des Lochgitters wie oben die Verstärkungsfasern, wobei die auf der anderen Seite des Lochgitters positionierte Vakuumeinrichtung das Harzmatrixmaterial so auf der einen Seite des Gitters hält, dass die Fasern in Position bleiben,
(c) Erwärmen des Harzmatrixmaterials in ausreichender Weise, um das Harzmatrixmaterial mit den Verstärkungsfasern auf der Oberfläche des Gitters zu verkleben, um eine Struktur aus Harz und Fasern zu bilden,
(d) die Struktur aus Harz und Fasern abkühlen lassen, so dass ein endformnahes Prepreg gebildet wird; und **gekennzeichnet durch**
(e) Trocknen des hergestellten Prepregs, indem (i) das Prepreg in ein Gehäuse mit einem Einlass und einem Auslass zum Hindurchleiten eines heißen trockenen Gases gelegt wird, und (ii) das heiße trockene Gas **durch** das Prepreg in dem Gehäuse geleitet wird.

2. Verfahren nach Anspruch 1 mit dem Schritt des Auflegens eines Schleiermaterials auf das Lochgitter.

3. Verfahren nach Anspruch 1 mit dem Schritt des Auflegens eines Schleiermaterials auf das hergestellte Prepreg.

4. Verfahren nach einem der Ansprüche 1 bis 3, wobei das Harzmatrixmaterial ein cyclisches Oligomer ist.

5. Verfahren nach einem der Ansprüche 1 bis 4, wobei das Harzmatrixmaterial ein cyclisches Polybutylenterephthalat-Oligomer ist.

6. Verfahren nach einem der Ansprüche 1 bis 5, wobei die Verstärkungsfaser und das Harzmatrixmaterial gleichzeitig aufgebracht werden.

7. Verfahren nach einem der Ansprüche 1 bis 6, wobei das Harzmatrixmaterial im Anschluss an die Verstärkungsfaser auf das Gitter aufgebracht wird.

8. Verfahren nach einem der Ansprüche 1 bis 7, bei dem ein Stück Faserverstärkung enthaltender Stoff auf wenigstens einen Teil des Prepregs aufgebracht wird.

9. Verfahren nach einem der Ansprüche 1 bis 8, bei dem zusätzliches Harzmatrixmaterial auf wenigstens einen Teil des Prepregs aufgebracht wird, bevor das Prepreg in eine Pressform gelegt wird.

10. Verfahren nach einem der Ansprüche 1 bis 9, wobei die Temperatur an der Gitteroberfläche von etwa 100°C bis etwa 250°C beträgt.

11. Verfahren nach einem der Ansprüche 1 bis 10, wobei das Erwärmen und Aufbringen des Harzmatrixmaterials mit Hilfe einer Flammspritzvorrichtung erfolgt.

12. Verfahren nach einem der Ansprüche 1 bis 11 mit dem Schritt des In-Kontakt-Bringens der Oberfläche eines hergestellten Prepregs mit einer rippenförmigen Struktur und das Aufklebens dieser rippenförmigen Struktur auf das Prepreg, um ein rippenförmiges Prepregelement zu bilden.

13. Verfahren nach einem der Ansprüche 1 bis 12 mit dem Schritt des Erwärmens und Pressens des Prepregs, um einen Verbundgegenstand zu bilden.

## Revendications

1. Procédé de fabrication d'un pré-imprégné de forme proche de celle de l'article final, approprié pour servir à la production d'un article composite, lequel procédé comporte les étapes suivantes :
a) déposer des fibres de renfort, en une quantité représentant au moins 13 % du volume du pré-imprégné, sur un premier côté d'une grille à petits trous du côté opposé de laquelle il y a un dispositif d'aspiration qui maintient les fibres en place sur le premier côté de la grille ;
b) déposer, sur le même côté de la grille à petits trous que les fibres de renfort mentionnées ci-dessus, une matière résineuse de matrice que le dispositif d'aspiration placé du côté opposé de la grille à petits trous maintient en place, avec les fibres, sur le premier côté de la grille ;
c) chauffer la matière résineuse de matrice, suffisamment pour que cette matière résineuse de matrice s'attache aux fibres de renfort, au niveau de la surface de la grille, de manière à former une structure de résine et de fibres ;
d) et laisser cette structure de résine et de fibres refroidir, de manière à ce qu'il se forme un pré-imprégné de forme proche de celle de l'article final;
et se **caractérise en ce que**
e) l'on fait sécher le pré-imprégné formé
i) en plaçant ce pré-imprégné dans une enceinte dotée d'une entrée et d'une sortie qui permettent de faire passer un gaz sec et chaud au travers,
ii) et en faisant passer un gaz sec et chaud à travers le pré-imprégné, dans cette enceinte.

2. Procédé conforme à la revendication 1, qui comporte une étape consistant à disposer un matériau de type voile sur la grille à petits trous.

3. Procédé conforme à la revendication 1, qui comporte une étape consistant à disposer un matériau de type voile sur le pré-imprégné formé.

4. Procédé conforme à l'une des revendications 1 à 3, dans lequel la matière résineuse de matrice est un oligomère cyclique.

5. Procédé conforme à l'une des revendications 1 à 4, dans lequel la matière résineuse de matrice est un oligomère cyclique de type poly-(butylène téréphtalate).

6. Procédé conforme à l'une des revendications 1 à 5, dans lequel on dépose en même temps les fibres de renfort et la matière résineuse de matrice.

7. Procédé conforme à l'une des revendications 1 à 6, dans lequel on dépose la matière résineuse de matrice sur la grille après les fibres de renfort.

8. Procédé conforme à l'une des revendications 1 à 7, qui comporte le fait de rajouter un morceau de tissu, contenant un renfort fait de fibres, à au moins une partie du pré-imprégné.

9. Procédé conforme à l'une des revendications 1 à 8, qui comporte le fait de rajouter un supplément de matière résineuse de matrice sur au moins une partie du pré-imprégné, avant de mettre ce pré-imprégné dans un moule de compression.

10. Procédé conforme à l'une des revendications 1 à 9, dans lequel la température, au niveau de la surface de la grille, vaut d'environ 100 °C à environ 250 °C.

11. Procédé conforme à l'une des revendications 1 à 10, dans lequel le chauffage de la matière résineuse de matrice et le dépôt de celle-ci sont effectués à l'aide d'un dispositif de plastication à chaud.

12. Procédé conforme à l'une des revendications 1 à 11, qui comporte des étapes consistant à mettre la surface du pré-imprégné formé en contact avec une structure nervurée et à faire adhérer cette structure nervurée au pré-imprégné, de manière à former un morceau de pré-imprégné nervuré.

13. Procédé conforme à l'une des revendications 1 à 12, qui comporte une étape consistant à chauffer et comprimer le pré-imprégné pour en faire un article composite.
